# EUROPÄISCHE PATENTSCHRIFT

(11) **EP 0 551 806 B1**
(45) Veröffentlichungstag und Bekanntmachung des Hinweises auf die Patenterteilung: **29.03.1995**
(21) Anmeldenummer: 92890269.1
(22) Anmeldetag: 23.12.1992
(51) Int. Cl.: F02F 1/22, F02B 27/04

(54) **Zweitakt-Brennkraftmaschine**
Two stroke internal combustion engine
Moteur à combustion interne à deux temps

(30) Priorität: 16.01.1992 AT 62/92
(43) Veröffentlichungstag der Anmeldung: 21.07.1993
(73) Patentinhaber: AVL Gesellschaft für Verbrennungskraftmaschinen und Messtechnik mbH.Prof.Dr.Dr.h.c. Hans List, 8020 Graz (AT)
(72) Erfinder: Landfahrer, Klaus, Dr., A-8020 Graz (AT); Alten, Hans, Dr. Dipl.-Ing., A-8020 Graz (AT); Wojik, Karl, Dipl.-Ing., A-8045 Graz (AT)
(74) Vertreter: Krause, Walter, Dr. Dipl.-Ing.

(56) Entgegenhaltungen:
- DE-C- 958 791
- GB-A- 488 403
- GB-A- 2 189 839
- PATENT ABSTRACTS OF JAPAN vol. 9, no. 300 (M-433)(2023) 27. November 1985 & JP-A-60 138 252 (SUZUKI JIDOSHA KOGYO K.K.)

## Beschreibung

Die Erfindung betrifft eine Zweitakt-Brennkraftmaschine mit einem oder mehreren Zylindern, von dem ein Auslaßkanal ausgeht, welcher eine vor allem durch die Formgebung der unteren Kontur gebildete diffusorartige Erweiterung besitzt.

Bei der Konstruktion von Zweitaktmotoren wird die Auslaßkanalgestaltung auf das Strömungsbild bei voll geöffnetem Auslaßschlitz hin optimiert. Um einen möglichst günstigen Gaswechsel zu erreichen, ist man bestrebt, große Strömungsquerschnitte zur Verfügung zu stellen. Die Größe des Auslaßquerschnittes ist allerdings konstruktiv begrenzt. Insbesonders stellt die maximal mögliche Größe des Fensters, das den Übergang von Auslaßkanal zum Zylinder bildet, eine Schranke für den Strömungsquerschnit dar, da sowohl die Höhe als auch die Breite des Fensters nicht beliebig erweitert werden kann.

Aus der FR-A 2 584 453 ist eine Zweitakt-Brennkraftmaschine bekannt, bei der sich der Auslaßkanal in seinem Querschnitt in Strömungsrichtung erweitert. Bei nur teilweise geöffnetem Auslaßschlitz entstehen jedoch bei dieser bekannten Brennkraftmaschine große Strömungsablösungen und Verwirbelungen im Auslaßkanal im Bereich der Kolbenkante. Diese Verwirbelungen erzeugen einen Strömungswiderstand, der den Gaswechsel behindert.

Aufgabe der Erfindung ist es, eine Zweitakt-Brennkraftmaschine zu schaffen, bei der die beschriebenen Nachteile vermieden werden und bei der bei nur teilweise geöffnetem Auslaßschlitz ein optimaler Strömungsverlauf im Auslaßkanal erreicht werden kann.

Erfindungsgemäß wird dies dadurch erreicht, daß der Auslaßkanal unmittelbar im Anschluß an den Zylinder eine düsenartige Verengung aufweist, die durch die Formgebung der unteren Kontur gebildet ist und an die die diffusorartige Erweiterung unmittelbar oder im Abstand anschließt.

Es wurde erkannt, daß für einen optimalen Ladungswechsel vor allem das Strömungsbild bei nur teilweise geöffnetem Auslaßschlitz von entscheidender Bedeutung ist. Durch die erfindungsgemäße düsenartige Verengung des Auslaßkanales, die durch die Formgebung der unteren Kontur erreicht wird, gelingt es, die Verwirbelungen im Auslaßkanal klein zu halten bzw. zu verhindern. In überraschender Weise wurde erkannt, daß diese Verengung des Auslaßkanales den Strömungswiderstand bei voll geöffnetem Auslaßschlitz nicht oder nur unwesentlich erhöht.

Besonders günstig ist es, wenn die wirksame Querschnittsfläche des Auslaßkanals im engsten Bereich der düsenartigen Verengung um 15 bis 50%, vorzugsweise um 20 bis 40% gegenüber der wirksamen Querschnittsfläche im Bereich des Anschlusses des Auslaßkanals an den Zylinder verringert ist. Dabei werden sowohl bei voll geöffnetem Auslaßschlitz als auch bei teilweise geöffnetem Auslaßschlitz günstige Strömungsverhältnisse im Auslaßkanal erreicht.

Insbesonders hat es sich als strömungstechnisch günstig herausgestellt, wenn der engste Querschnitt des Auslaßkanals in einem Abstand vom Durchstoßpunkt der Achse des Auslaßkanals durch den Mantel des Zylinders liegt, der zwischen dem 0,7 und dem zweifachen der Schlitzhöhe beträgt, wobei die Schlitzhöhe als Abstand zwischen der unteren Steuerkante und der oberen Steuerkante des Auslaßkanals definiert ist.

In einer besonders bevorzugten Ausführungsvariante der Erfindung ist vorgesehen, daß im Zylinder ein Kolben axial beweglich angeordnet ist und daß die Oberfläche des Kolbens in seinem unteren Totpunkt, etwa auf der Höhe der unteren Steuerkante des Auslaßkanals, liegt.

Weiters kann im Auslaßkanal ein Auslaßsteuerorgan zur Veränderung des Auslaßquerschnittes vorgesehen sein.

Die erfindungsgemäße Form des Auslaßkanales ist besonders für Motoren mit einer Auslaßsteuerung sinnvoll, da durch diese Gestaltung vor allem das Drehmoment bei hohen Drehzahlen verbessert wird. Bei diesen hohen Drehzahlen ist das Steuerorgan voll geöffnet und gibt den vollen Querschnitt des Auslaßkanals frei. Bei kleinen Drehzahlen hingegen ist es sogar erwünscht, den Strömungswiderstand im Auslaßkanal zu erhöhen.

Weiters können im Auslaßkanal auch Nebenauslässe vorgesehen sein. Als Auslaßquerschnitt wird in diesem Fall die Summe der strömungstechnisch wirksamen Querschnitte bezeichnet.

Im folgenden wird die Erfindung anhand der in den Figuren dargestellten Ausführungsbeispiele näher erläutert. Es zeigen die Figuren schematisch:
- Fig. 1: einen Zylinder einer bekannten Brennkraftmaschine im Schnitt;
- Fig. 2: einen Zylinder einer erfindungsgemäßen Brennkraftmaschine im Schnitt;
- Fig. 3: eine weitere Ausführungsvariante im Schnitt,
- Fig. 4: eine Ansicht der Ausführungsvariante von Fig. 3 vom Zylinderinneren her;
- Fig. 5: eine Draufsicht der Variante der Fig. 3 und 4 und die
- Fig. 6: eine weitere Ausführungsvariante der Erfindung im Schnitt.

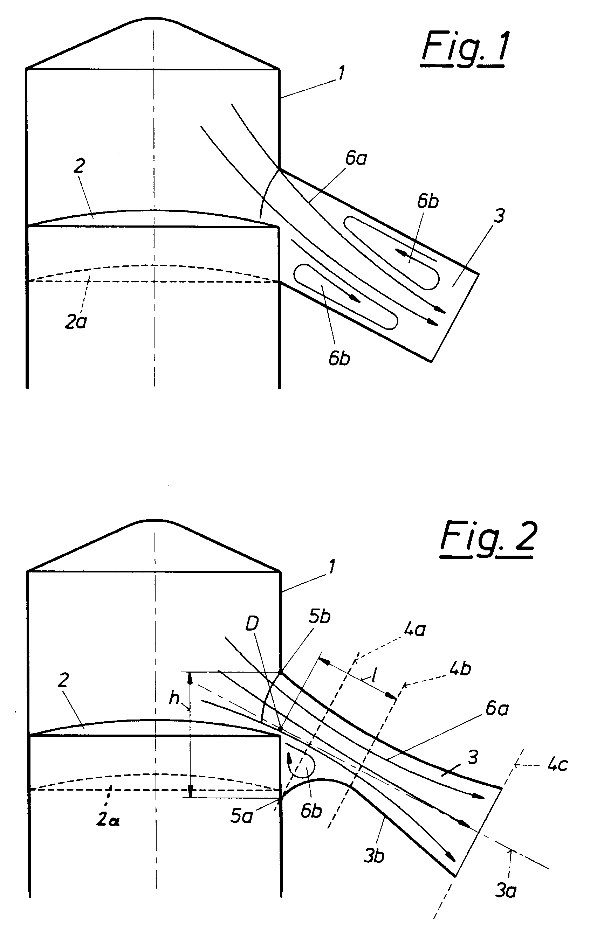

In der Fig. 1 ist ein Zylinder 1 einer bekannten Brennkraftmaschine im Schnitt dargestellt, wobei alle unwesentlichen Details weggelassen worden sind. Im Zylinder 1 ist ein Kolben 2 axial beweglich angeordnet. Strichliert ist mit 2a der Kolben 2 in seinem unteren Totpunkt eingezeichnet. An den Zylinder 1 schließt ein Auslaßkanal 3 an, dessen Querschnitt im wesentlichen konstant ist. Es ist ersichtlich, daß bei teilweise geöffnetem Auslaßschlitz neben der Hauptströmung 6a relativ große Strömungswirbel 6b entstehen, die einen relativ großen Strömungswiderstand hervorrufen.

In Fig. 2 ist ein Zylinder 1 einer erfindungsgemäßen Brennkraftmschine dargestellt. Auch hier ist der Kolben 2 strichliert als 2a in seinem unteren Totpunkt dargestellt. Die untere Steuerkante 5a des Auslaßkanals 3 liegt im Bereich der Oberfläche des Kolbens 2 in seinem unteren Totpunkt 2a. Die Schlitzhöhe h ist als Abstand der unteren Steuerkante 5a von der oberen Steuerkante 5b definiert. Die Strömungsquerschnitte 4a, 4b und 4c sind als Querschnitte des Auslaßkanals 3 definiert, die normal auf die Achse 3a des Auslaßkanals sind. Der Strömungsquerschnitt 4a am Auslaßschlitz ist jener Querschnitt, der durch die untere Steuerkante 5a geht. Der Strömungsquerschnitt 4b ist jener an der engsten Stelle des Auslaßkanals 3. Der Strömungsquerschnitt 4c am Ende des diffusorartig erweiterten Teiles des Auslaßkanals 3 entspricht etwa dem Querschnitt 4a. Die Form der Querschnitte 4a, 4b und 4c ist im Bereich des Zylinders etwa rechteckig und kann stromabwärts in einen kreisförmigen oder ovalen Querschnitt übergehen. Dies ist jedoch für die Funktion nicht relevant. Aus der Fig. 2 ist ferner ersichtlich, daß die Querschnittsverengung vor allem durch die Formgebung der unteren Kontur 3b des Auslaßkanals 3 realisiert ist. Der Querschnitt 4b ist bis etwa auf die Hälfte des Querschnittes 4a verengt.

Der Abstand 1 des engsten Strömungsquerschnittes 4b vom Durchstoßpunkt D der Kanalachse 3a mit dem Mantel des Zylinders 1 entspricht etwa der Schlitzhöhe h. Es ist ersichtlich, daß die Hauptströmung 6a kaum behindert wird. Die kleine Verwirbelung 6b nach der Kolbenkante erzeugt nur einen geringen Widerstand. Die Länge des Auslaßkanals 3 ist nicht unmittelbar von Bedeutung. Wesentlich für die erfindungsgemäße Gestaltung des Kanals 3 ist der an den engsten Querschnitt 4b anschließende Diffusor, da nur dadurch erhöhte Widerstände bei voll geöffnetem Auslaßschlitz vermieden werden können. Allerdings kann nach Erreichen des engsten Querschnitts 4b dieser Querschnitt auf einer Länge von bis zum fünffachen des hydraulischen Durchmessers des Auslaßkanals 3 beibehalten werden, bevor die diffusorförmige Erweiterung beginnt.

Hinsichtlich der Optimierungskriterien für den kleinsten Kanalquerschnitt 4b kann gesagt werden, daß mit abnehmendem Querschnitt die besten Strömungsverhältnisse bei kleineren Schlitzöffnungen erzielt werden, andererseits werden dadurch die Strömungsverluste bei voll offenem Schlitz immer höher. Ziel einer Optimierung ist es, jenen kleinsten Querschnitt 4b zu finden, bei dem die Strömung bei voll geöffnetem Schlitz nicht nennenswert verschlechtert wird.

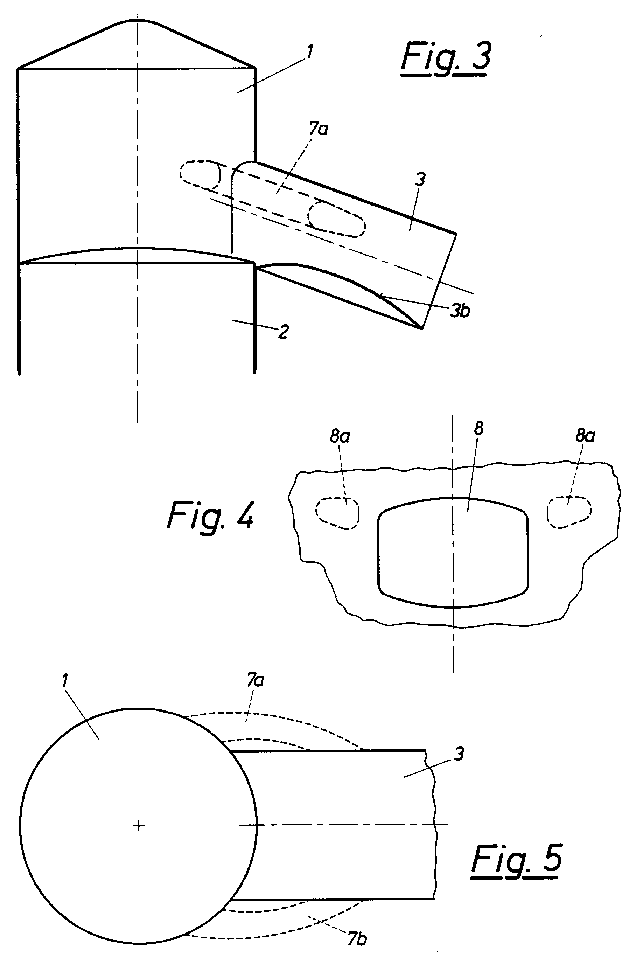

In den Fig. 3, 4 und 5 ist eine Ausführungsvariante der Erfindung mit Nebenauslässen 7a und 7b dargestellt. In der Fig. 4 ist die Form des Fensters 8 ersichtlich, das die Öffnung des Auslaßkanals 3 zum Zylinder 1 hin definiert. Seitlich sind die Fenster 8a und 8b der Nebenauslässe 7a und 7b angedeutet.

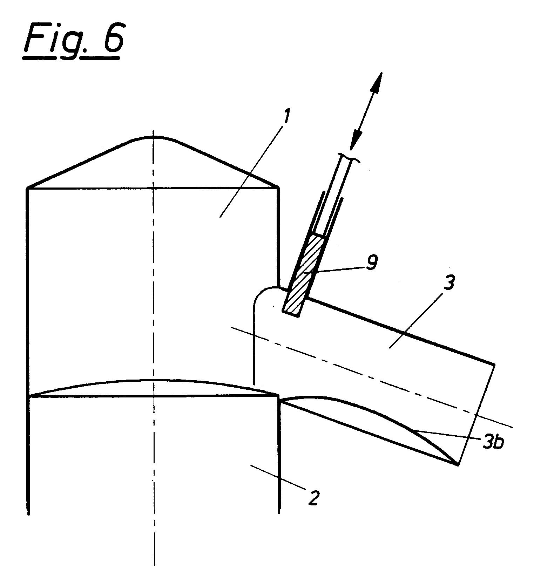

In Fig. 6 ist eine weitere Ausführungsvariante der Erfindung dargestellt. Dabei ist ein Schieber 9 als Auslaßsteuerorgan vorgesehen, das bei niederen Drehzahlen das Ausströmen aus dem Zylinder 1 nach dem Öffnen des Auslaßschlitzes 3 während einer genau definierten Zeitdauer behindert, und solcherart die Auslaßsteuerzeit des Motors verändert. Bei hohen Drehzahlen ist jedoch der Schieber 9 vollständig hervorgezogen, sodaß sich die gleiche Strömungssituation wie in Fig. 2 ergibt.

Bei Versuchen hat sich gezeigt, daß optimale Verhältnisse bei einer Verengung des Querschnittes 4b um 15 bis 50 % des wirksamen Querschnitts 4a am Auslaßschlitz 3 erreicht werden. Die Durchflußverbesserung bei gegebener Druckdifferenz beträgt dabei ca. 25 % bei zu 30 bis 50 % geöffnetem Schlitz. Bei voll geöffnetem Auslaßschlitz konnte bei der untersuchten Variante jegliche Durchflußverschlechterung vermieden werden.

## Patentansprüche

1. Zweitakt-Brennkraftmaschine mit einem oder mehreren Zylindern (1), von dem ein Auslaßkanal (3) ausgeht, welcher eine vor allem durch die Formgebung der unteren Kontur (3b) gebildete diffusorartige Erweiterung besitzt, **dadurch gekennzeichnet**, daß der Auslaßkanal (3) unmittelbar im Anschluß an den Zylinder (1) eine düsenartige Verengung aufweist, die durch die Formgebung der unteren Kontur (3b) gebildet ist und an die die diffusorartige Erweiterung unmittelbar oder im Abstand anschließt.

2. Brennkraftmaschine nach Anspruch 1, **dadurch gekennzeichnet**, daß die wirksame Querschnittsfläche (4b) des Auslaßkanals (3) im engsten Bereich der düsenartigen Verengung um 15 bis 50%, vorzugsweise um 20 bis 40%, gegenüber der wirksamen Querschnittsfläche (4a) im Bereich des Anschlusses des Auslaßkanals (3) an den Zylinder (1) verringert ist.

3. Brennkraftmaschine nach einem der Ansprüche 1 oder 2, **dadurch gekennzeichnet**, daß der engste Querschnitt (4b) des Auslaßkanals (3) in einem Abstand (1) vom Durchstoßpunkt (D) der Achse (3a) des Auslaßkanals (3) durch den Mantel des Zylinders (1) liegt, der zwischen dem 0,7 und dem zweifachen der Schlitzhöhe (h) beträgt, wobei die Schlitzhöhe (h) als Abstand zwischen der unteren Steuerkante (5a) und der oberen Steuerkante (5b) des Auslaßkanals (3) definiert ist.

4. Brennkraftmaschine nach einem der Ansprüche 1 bis 3, **dadurch gekennzeichnet**, daß im Auslaßkanal (3) ein Auslaßsteuerorgan zur Veränderung des Auslaßquerschnittes vorgesehen ist.

5. Brennkraftmaschine nach einem der Ansprüche 1 bis 4, **dadurch gekennzeichnet**, daß der Auslaßkanal (3) mindestens einen Nebenauslaß (7a, 7b) besitzt.

## Claims

1. A two-stroke internal combustion engine with at least one cylinder (1) opening into an exhaust passage (3) with a diffuser-type flare established by the shape of the lower contour (3b), wherein the exhaust passage (3) is provided with a nozzle-type throat in the immediate vicinity of the cylinder (1), which is formed by the shape of the lower contour (3b), and which is followed by the diffuser-type flare either immediately or at a distance.

2. An internal combustion engine as in claim 1, wherein the effective area of cross-section (4b) of the exhaust passage (3) in the narrowest part of the said throat is reduced by 15 to 50 percent, preferably by 20 to 40 percent, as compared to the effective area of cross-section (4a) in the part where the exhaust passage (3) connects to the cylinder (1).

3. An internal combustion engine as in claim 1 or 2, wherein the smallest cross-section (4b) of the exhaust passage (3) is at a given distance (1) from the intersection point (D) of the axis (3a) of the exhaust passage (3) and the surface of the cylinder (1), which distance is 0,7 to 2 times the height (h) of the exhaust port, port height (h) in this case meaning the distance between lower and upper controlling edge (5a and 5b) of the exhaust passage (3).

4. An internal combustion engine as in any of claims 1 to 3, wherein the exhaust passage (3) is provided with an exhaust control element modifying the exhaust cross-section.

5. An internal combustion engine as in any of claims 1 to 4, wherein the exhaust passage (3) is provided with at least one auxiliary outlet (7a, 7b).

## Revendications

1. Moteur à combustion interne à deux temps avec au moins un cylindre (1) duquel part un canal d'échappement (3), qui est muni d'un élargissement type diffuseur déterminé surtout par la forme du contour inférieur, **caractérisé en ce que**
le canal d'échappement (3) comporte un rétrécissement en forme d'une buse directement à côté du cylindre (1), ledit rétrécissement étant déterminé par la forme du contour inférieur (3b), et étant suivi de l'élargissement type diffuseur directement ou à une certaine distance.

2. Moteur à combustion interne selon la revendication 1, **caractérisé en ce que** l'aire (4b) effective de la coupe transversale du canal d'échappement (3) est reduite de 15% à 50 % dans la partie la plus étroite du rétrécissement en forme d'une buse, de préférence de 20% à 40%, vis-à-vis de l'aire (4a) effective dans la partie où le canal d'échappement (3) joint le cylindre (1).

3. Moteur à combustion interne selon l'une des revendications 1 ou 2, **caractérisé en ce que** l'aire de la coupe transversale (4b) la plus étroite du canal d'échappement (3) est située a une distance du point de l'intersection (D) de l'axe (3a) du canal d'échappement (3) et la surface du cylindre (1), cette distance étant de 0.7 à 2 fois la mesure de l'hauteur (h) de la fente d'échappement, l'hauteur (h) étant défini en ce cas comme la distance entre l'arête commandante inférieure (5a) et l'arête commandante supérieure (5b) du canal d'échappement (3).

4. Moteur à combustion interne selon l'une quelconque des revendications 1 à 3, **caractérisé en ce que** le canal d'échappement (3) est muni d'un organe de manoeuvre pour modifier la coupe transversale du ledit canal.

5. Moteur à combustion interne selon l'une quelconque des revendications 1 à 4, **caractérisé en ce que** le canal d'échappement (3) est muni d'un canal auxiliaire (7a, 7b) au moins.
